# FASCICULE DE BREVET EUROPEEN

(11) **EP 0 497 640 B1**
(45) Date de publication et mention de la délivrance du brevet: **17.05.1995**
(21) Numéro de dépôt: 92400084.7
(22) Date de dépôt: 13.01.1992
(51) Int. Cl.: B60B 7/06

(54) **Enjoliveur de roue perfectionné, notamment de véhicule automobile**
Radzierblende, insbesondere für Kraftfahrzeuge
Wheel cover, especially for vehicle wheels

(30) Priorité: 29.01.1991 FR 9100967
(43) Date de publication de la demande: 05.08.1992
(73) Titulaire: ATTAX, F-78400 Chatou (FR)
(72) Inventeur: Dubost, Dominique, F-78170 La Celle Saint Cloud (FR)
(74) Mandataire: Habasque, Etienne Joel Jean-François

(56) Documents cités:
- GB-A- 213 010
- US-A- 3 171 183
- US-A- 4 133 583
- PATENT ABSTRACTS OF JAPAN vol. 4, no. 150 (M-37)(632) 22 Octobre 1980 & JP-A-55 102 702 (TOUGOU SEISANKUSHO) 6 août 1980
- PATENT ABSTRACTS OF JAPAN vol. 13, no. 94 (M-804)(3442) 6 Mars 1989 & JP-A-63 287 601 (KANTO SEIKI) 24 novembre 1988

## Description

La présente invention concerne un enjoliveur de roue, notamment de véhicule automobile.

On connait déjà dans l'état de la technique notamment par les documents US-A-4 133 583 et JP-A-55 102 702, des enjoliveurs de roue qui comportent une face avant et une face arrière munie de moyens d'accrochage sur le reste de la roue du véhicule.

Ces moyens d'accrochage peuvent se présenter sous différentes formes.

En effet, ces moyens d'accrochage peuvent comporter des plots d'accrochage sur des organes de fixation de la roue sur un moyeu du véhicule, constitués par exemple par des vis ou des écrous coopérant avec des goujons solidaires du moyeu, chaque plot comportant des branches déformables élastiquement à l'extrémité libre de chacune desquelles est prévue une portion repliée d'accrochage sur une surface de butée de l'organe de fixation correspondant.

Lors de la mise en place ou du retrait de l'enjoliveur sur la roue correspondante, ces branches se déforment élastiquement pour franchir la tête de l'organe de fixation.

Les moyens d'accrochage peuvent également comporter des crochets déformables élastiquement, adaptés pour coopérer avec la roue du véhicule et plus particulièrement avec une rainure de la jante de celle-ci.

Dans ce cas également, les crochets se déforment élastiquement pour permettre la mise en place ou le retrait de l'enjoliveur.

Tous ces enjoliveurs présentent un certain nombre d'inconvénients au niveau de la sécurité de fixation de l'enjoliveur sur la roue.

En effet, les enjoliveurs ne sont en fait qu'accrochés sur la roue et peuvent être retirés très facilement en particulier lors d'une tentative de vol de cet enjoliveur ou de la roue correspondante.

Pour limiter ces risques de vol, en particulier des roues du véhicule, on a été amené à utiliser des écrous ou des vis de sécurité qui présentent l'inconvénient d'être relativement chers et peu fiables.

Le but de l'invention est donc de résoudre ces problèmes en proposant un enjoliveur de roue qui puisse être accroché de manière très fiable à la roue du véhicule et qui puisse également servir d'antivol de roue.

A cet effet, l'invention a pour objet un enjoliveur de roue notamment de véhicule automobile, du type comportant une face avant et une face arrière munie de moyens d'accrochage sur le reste de la roue du véhicule, caractérisé en ce qu'il comporte des moyens de blocage à verrouillage de sécurité des moyens d'accrochage, déplaçables par un utilisateur entre une position escamotée et une position active de blocage des moyens d'accrochage.

Selon un premier mode de réalisation, les moyens d'accrochage comprennent des plots d'accrochage sur des organes de fixation de la roue sur un moyeu du véhicule, chaque plot comportant des branches déformables élastiquement à l'extrémité libre de chacune desquelles est prévue une portion repliée d'accrochage sur une surface de butée de l'organe de fixation correspondant, et les moyens de blocage comprennent un organe de blocage muni d'au moins un manchon disposé coaxialement autour d'au moins un plot, ledit organe de blocage étant monté déplaçable axialement entre une position escamotée de libération des branches du ou de chaque plot pour la mise en place ou le retrait de l'enjoliveur et une position active de blocage des branches autour de la tête de l'organe de fixation, pour verrouiller l'enjoliveur en position par rapport à la roue.

Selon un autre mode de réalisation, les moyens d'accrochage comprennent des crochets déformables élastiquement adaptés pour coopérer avec la roue du véhicule et les moyens de blocage comprennent un organe de blocage muni, au niveau de chaque crochet, d'une surface de butée, ledit organe de blocage étant monté déplaçable entre une position escamotée de libération des crochets pour la mise en place ou le retrait de l'enjoliveur et une position active de blocage de ceux-ci par les surfaces de butée, pour verrouiller l'enjoliveur en position par rapport à la roue.

Avantageusement également, il est prévu des moyens de verrouillage de sécurité des moyens de blocage au moins en position active.

L'invention sera mieux comprise à l'aide de la description qui va suivre, donnée uniquement à titre d'exemple et faite en se référant aux dessins annexés, sur lesquels :
- les Fig.1 à 3 représentent des vues partielles en coupe d'un premier mode de réalisation d'un enjoliveur selon l'invention, illustrant la mise en place de celui-ci sur une roue; et
- la Fig.4 représente des demi-vues en coupe d'un second mode de réalisation d'un enjoliveur selon l'invention, illustrant la mise en place de celui-ci sur une roue.

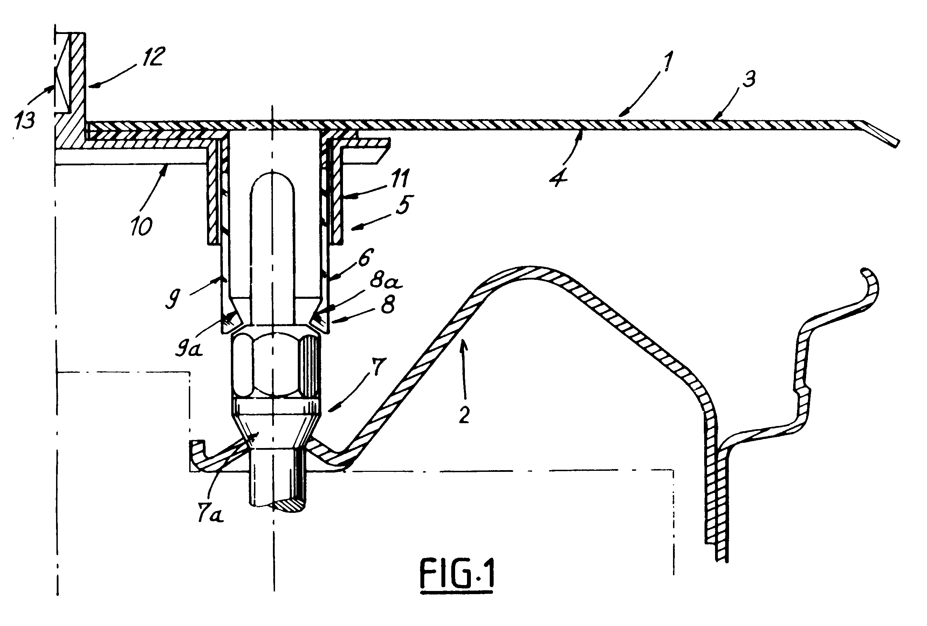

Ainsi qu'on peut le voir sur les Fig.1 à 3, un enjoliveur selon l'invention, désigné par la référence 1, est adapté pour être monté sur une roue 2 de véhicule automobile.

Cet enjoliveur de roue comporte de manière classique une face avant 3 et une face arrière 4 munie de moyens d'accrochage 5 sur le reste de la roue du véhicule.

Dans le mode de réalisation représenté sur ces Fig.1 à 3, ces moyens d'accrochage 5 comprennent des plots d'accrochage 6 adaptés pour coopérer avec des organes 7 de fixation de la roue 2 sur un moyeu du véhicule, ces organes étant constitués par exemple par des vis.

Ces plots 6 comportent en fait des branches par exemple 8 et 9, déformables élastiquement et à l'extrémité libre de chacune desquelles est prévue une portion repliée 8a, 9a d'accrochage sur une surface de butée, par exemple 7a, de la tête de l'organe de fixation correspondant.

Ces portions repliées 8a et 9a comportent par exemple des faces en forme de rampe, facilitant la mise en place, le retrait et le maintien en position de l'enjoliveur sur la roue.

En effet, ces rampes facilitent la déformation de ces branches lors de la mise en place ou du retrait de l'enjoliveur et coopèrent avec la surface de butée 7a de l'organe de fixation, qui peut être tronconique, pour maintenir cet enjoliveur en position comme cela sera décrit plus en détail par la suite.

Selon l'invention, il est prévu des moyens de blocage à verrouillage de sécurité de ces moyens d'accrochage.

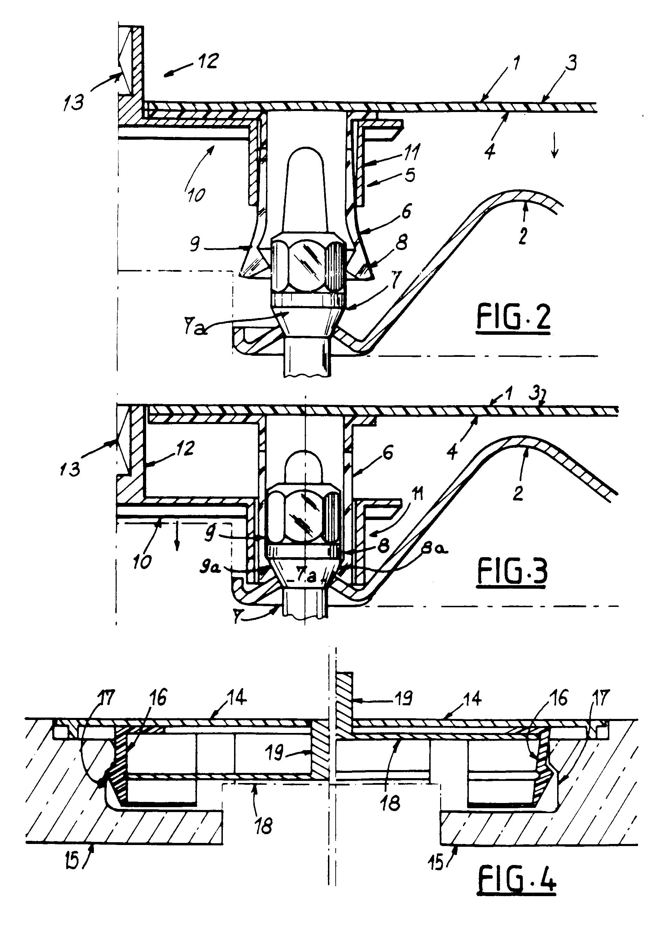

Dans le mode de réalisation représenté sur ces figures 1 à 3, ces moyens de blocage comprennent un organe de blocage 10, constitué par exemple par un disque, muni au niveau d'au moins l'un des plots d'accrochage 6, d'un manchon 11 disposé coaxialement autour de celui-ci, cet organe de blocage 10 étant monté déplaçable, comme on peut le voir sur ces figures, entre une position escamotée (Fig.1) de libération des branches 8 et 9 du ou de chaque plot, pour la mise en place ou le retrait de l'enjoliveur et une position active (Fig.3) de blocage des branches 8,9 du ou de chaque plot autour de la tête de l'organe de fixation correspondant pour verrouiller l'enjoliveur en position sur la roue.

L'organe de blocage 10 et donc le ou chaque manchon 11 sont montés déplaçables axialement entre ces deux positions par l'intermédiaire d'une portion de manoeuvre 12 qui, lorsque l'organe de blocage est en position escamotée, fait saillie à partir de la face avant de l'enjoliveur (Fig.1) et est donc accessible à un utilisateur.

Cette portion de manoeuvre 12 est équipée de moyens de verrouillage de sécurité 13 de l'organe de blocage 10 en position active et éventuellement en position escamotée.

Ces moyens de verrouillage de sécurité 13 peuvent être constitués par exemple par une serrure associée à une clé.

Ainsi, si l'on part de la Fig.1, qui représente la première phase du montage d'un enjoliveur selon l'invention sur une roue, l'organe de blocage 10 et la portion de manoeuvre 12 sont dans une première position dite escamotée, dans laquelle la portion de manoeuvre 12 fait saillie à partir de la face avant de l'enjoliveur et le ou chaque manchon de l'organe de blocage est dans une position de libération des branches 8 et 9 des plots d'accrochage.

Lorsque l'utilisateur pousse l'enjoliveur pour le mettre en place sur la roue, les branches 8 et 9 des plots peuvent donc se déformer pour franchir la tête de l'organe de fixation 7 comme cela est représenté sur la Fig.2. La mise en place de l'enjoliveur se poursuit jusqu'à ce que les portions repliées 8a, 9a des extrémités des branches 8 et 9 des plots d'accrochage, soient en position de coopération avec la surface de butée 7a de l'organe de fixation correspondant 7.

Une fois cette position atteinte, l'utilisateur, pour verrouiller l'enjoliveur en position, pousse la portion de manoeuvre 12 de l'organe de blocage 10 pour amener celui-ci et plus particulièrement les manchons 11 de celui-ci en position active de blocage des branches 8, 9 des plots d'accrochage autour de la tête des organes de fixation correspondants.

L'organe de blocage 10 et donc le ou chaque manchon de celui-ci, de même que la portion de manoeuvre 12, se déplacent jusqu'à la position représentée sur la Fig.3, dans laquelle la portion de manoeuvre 12 de l'organe de blocage est escamotée entre l'enjoliveur 1 et la roue 2 et les manchons 11 sont en position active autour des branches 8 et 9 des plots d'accrochage pour maintenir celles-ci en position autour des organes de fixation et empêcher tout retrait de l'enjoliveur.

Dans cette position représentée sur la Fig.3, les portions d'accrochage 8a, 9a des extrémités correspondantes des branches 8, 9 de chaque plot d'accrochage coopèrent avec la surface de butée 7a de l'organe de fixation correspondant et une surface correspondante de la roue 2 du véhicule, pour assurer un positionnement correct de l'enjoliveur par rapport à la roue.

Ainsi qu'on l'a mentionné précédemment, la portion de manoeuvre 12 de ces moyens de blocage peut être munie de moyens de verrouillage de sécurité 13 de ces moyens de blocage 10 en positions active et éventuellement escamotée.

A titre d'exemple, ces moyens de verrouillage 13 peuvent être constitués par une serrure associée à une clé permettant d'assurer un haut degré de sécurité de la fixation de l'enjoliveur sur la roue.

Bien entendu, d'autres moyens de verrouillage de sécurité peuvent être utilisés tels que des organes de montage ou de démontage spéciaux, par exemple dont la partie active présente une forme particulière.

Bien entendu, l'organe de blocage 10, qui dans le mode de réalisation décrit a été représenté sous la forme d'un disque, peut présenter d'autres formes.

Sur la Fig. 4, on a représenté un second mode de réalisation d'un enjoliveur de roue selon l'invention.

Dans ce mode de réalisation, l'enjoliveur 14 est toujours adapté pour être fixé sur une roue 15 de véhicule.

Dans ce mode de réalisation, cet enjoliveur constitue une sorte de trappe d'accès à un logement prévu dans cette roue et dans lequel sont disposés les organes de fixation de la roue sur le moyeu du véhicule.

L'enjoliveur comporte également une face avant et une face arrière munie de moyens d'accrochage sur le reste de la roue du véhicule.

Dans ce cas, les moyens d'accrochage sont constitués par des crochets, par exemple 16, adaptés pour coopérer avec le reste de la roue et en particulier une rainure 17 de la jante de celle-ci, pour assurer la fixation de l'enjoliveur sur la roue. Ces moyens d'accrochage sont en fait constitués par des crochets déformables élastiquement permettant la mise en place ou le retrait de l'enjoliveur.

Ainsi qu'on l'a mentionné précédemment, ces moyens d'accrochage présentent des inconvénients au niveau de la sécurité de fixation de l'enjoliveur.

Selon l'invention, il est également prévu des moyens de blocage à verrouillage de sécurité de ces moyens d'accrochage.

Dans ce mode de réalisation, ces moyens de blocage comprennent un organe de blocage 18 qui est représenté sous la forme d'un disque de blocage, en position escamotée dans la partie droite de cette figure et en position active, dans la partie gauche de celle-ci.

Cet organe de blocage 18 est muni au niveau de chacun des crochets 16, d'une surface de butée et il est monté déplaçable entre la position escamotée de libération des crochets pour la mise en place ou le retrait de l'enjoliveur et la position active de blocage de ceux-ci, pour verrouiller l'enjoliveur en position sur la roue.

On conçoit en effet que dans la position escamotée de l'organe de blocage, les crochets peuvent se déformer élastiquement pour permettre le montage ou le démontage de l'enjoliveur.

Cependant, en position active de l'organe de blocage, telle que représentée dans la partie gauche de cette figure, ces crochets sont bloqués en position par l'organe de blocage et plus particulièrement les surfaces de butées correspondantes de celui-ci et ne peuvent donc plus se déformer, de sorte que leur démontage est impossible.

Dans le mode de réalisation représenté sur cette figure, l'organe de blocage et les surfaces de butée sont montés déplaçables axialement entre les positions escamotée et active.

Comme dans le premier mode de réalisation, cet organe de blocage 18 peut comporter une portion de manoeuvre 19, qui, lorsque l'organe de blocage est en position escamotée, fait saillie à partir de la face avant de l'enjoliveur et est donc accessible à l'utilisateur pour permettre le déplacement de cet organe vers une position active dans laquelle cette portion de manoeuvre est escamotée entre l'enjoliveur et la roue.

De même, cette portion de manoeuvre peut être équipée de moyens de verrouillage de sécurité constitués par exemple par une serrure associée à une clé ou d'autres moyens.

Bien entendu également, l'organe de blocage peut être monté déplaçable à rotation entre sa position active et sa position escamotée.

On notera que les moyens de verrouillage de l'organe de blocage sont utilisés pour déplacer cet organe entre sa position active et sa position escamotée, l'utilisateur tirant par exemple sur la clé pour assurer ce déplacement.

## Revendications

1. Enjoliveur de roue, notamment de véhicule automobile, du type comportant une face avant et une face arrière munie de moyens d'accrochage (6;16) sur le reste de la roue (2; 15) du véhicule, caractérisé en ce qu'il comporte des moyens de blocage (10,11; 18) à verrouillage de sécurité des moyens d'accrochage, déplaçables par un utilisateur entre une position escamotée et une position active de blocage des moyens d'accrochage.

2. Enjoliveur selon la revendication 1, dans lequel les moyens d'accrochage comprennent des plots d'accrochage (6) sur des organes (7) de fixation de la roue (2) sur un moyeu du véhicule, chaque plot (6) comportant des branches (8,9) déformables élastiquement à l'extrémité de chacune desquelles est prévue une portion repliée (8a,9a) d'accrochage sur une surface de butée (7a) de l'organe de fixation correspondant, caractérisé en ce que les moyens de blocage comprennent un organe de blocage (10) muni d'au moins un manchon (11) disposé coaxialement autour d'au moins un plot (6), ledit organe (10) étant monté déplaçable axialement entre une position escamotée de libération des branches (8,9) du ou de chaque plot (6) pour la mise en place ou le retrait de l'enjoliveur et une position active de blocage des branches (8,9) autour de la tête de l'organe de fixation, pour verrouiller l'enjoliveur en position par rapport à la roue.

3. Enjoliveur selon la revendication 2, caractérisé en ce que l'organe de blocage (10) comporte un manchon (11) autour de chaque plot (6).

4. Enjoliveur selon la revendication 1, dans lequel les moyens d'accrochage comprennent des crochets (16) déformables élastiquement, adaptés pour coopérer avec la roue (15) du véhicule, caractérisé en ce que les moyens de blocage comprennent un organe de blocage (18) muni, au niveau de chaque crochet, d'une surface de butée, ledit organe étant monté déplaçable entre une position escamotée de libération des crochets pour la mise en place ou le retrait de l'enjoliveur, et une position active de blocage de ceux-ci par les surfaces de butée, pour verrouiller l'enjoliveur en position par rapport à la roue.

5. Enjoliveur selon la revendication 4, caractérisé en ce que l'organe de blocage (18) est monté déplaçable axialement entre sa position escamotée et sa position active.

6. Enjoliveur selon l'une quelconque des revendications 2 à 5, caractérisé en ce que l'organe de blocage (10;18) comporte une portion de manoeuvre (12; 19) accessible à l'utilisateur à partir de la face avant de l'enjoliveur pour le déplacement de l'organe de butée (10; 18) entre ses positions escamotée et active.

7. Enjoliveur selon la revendication 6, caractérisé en ce que la portion de manoeuvre comporte des moyens de verrouillage de sécurité (13) de l'organe de blocage au moins en position active.

8. Enjoliveur selon la revendication 7, caractérisé en ce que les moyens de verrouillage de sécurité (13) comprennent une serrure associée à une clé.

## Claims

1. Wheel cover, in particular of a motor vehicle of the type having a front face and a rear face furnished with catching means (6; 16) to the rest of the wheel (2; 15) of the vehicle, characterised in that it comprises locking means (10, 11; 18) for safety locking the catching means, displaceable by a user between a retracted position and an active locking position of the catching means.

2. Wheel cover according to claim 1, in which the catching means comprise catching pins (6) on the fixing elements (7) of the wheel (2) to the vehicle hub, each pin comprising elastically malleable arms (8, 9) at the end of each one of which a raised catching part (8a, 9a) is provided on a stop surface (7a) of the corresponding fixing element, characterised in that the locking means comprise a locking member (10) equipped with at least one sleeve (11) disposed coaxially around at least one pin (6), said member (10) being displaceably mounted axially between a retracted position disengaging the arms (8, 9) of the pin or of each pin (6) for the installation or removal of the wheel cover and an active position locking the arms (8, 9) around the head of the fixing element to lock the wheel cover in position in relation to the wheel.

3. Wheel cover according to claim 2, characterised in that the locking member (10) comprises a sleeve (11) around each pin (6).

4. Wheel cover according to claim 1 in which the catching means comprise elastically malleable hooks (16) adapted to cooperate with the wheel (15) of the vehicle, characterised in that the locking means comprise a locking member (18) furnished at the level of each hook with stop surface, said member being displaceably mounted between a retracted position disengaging the hooks for the installation or removal of the wheel cover and an active locking position thereof by the stop surfaces to lock the wheel cover in position in relation to the wheel.

5. Wheel cover according to claim 4, characterised in that the locking member (18) is displaceably mounted axially between its retracted position and active position.

6. Wheel cover according to any one of claims 2 to 5, characterised in that the locking member (10; 18) comprises a manoeuvring part (12; 19) accessible to the user from the front face of the wheel cover for the displacement of the stop element (10; 18) between its retracted and active positions.

7. Wheel cover according to claim 6 characterised in that the manoeuvrable part comprises safety locking means (13) of the locking organ at least in an active position.

8. Wheel cover according to claim 7, characterised in that the safety locking means (13) comprises a lock associated with a key.

## Patentansprüche

1. Radzierblende, insbesondere für Kraftfahrzeuge, umfassend eine Vorderseite und eine Rückseite, die mit Mitteln (6; 16) zum Einhaken am Rest des Rades (2; 15) des Fahrzeugs versehen ist, dadurch gekennzeichnet, daß sie Blockiermittel (10, 11; 18) mit Sicherheitsverriegelung der Einhakmittel besitzt, die durch einen Benutzer zwischen einer ausgerückten Stellung und einer aktiven Stellung der Blockierung er Einhakmittel bewegbar sind.

2. Radzierblende nach Anspruch 1, bei der die Einhakmittel Stecker (6) zum Einhaken auf Organen (7) zur Befestigung des Rads (2) auf einer Nabe des Fahrzeugs umfassen, wobei jeder Stecker (6) elastisch verformbare Schenkel (8, 9) besitzt, wobei am Ende jedes dieser Schenkel ein umgebogener Abschnitt (8a, 9a) zum Einhaken an einer Anschlagsfläche (7a) des entsprechenden Befestigungsorgans vorgesehen ist, dadurch gekennzeichnet, daß die Blockiermittel ein Blockierorgan (10) umfassen, das mit mindestens einer Muffe (11) versehen ist, die koaxial um mindestens einen Stecker (6) herum angeordnet ist, wobei dieses Organ (10) zwischen einer ausgerückten Stellung der Freigabe der Schenkel (8, 9) des oder jedes Steckers (6) zum Aufsetzen oder zum Abnehmen der Zierblende und einer aktiven Stellung der Blockierung der Schenkel (8, 9) auf dem Kopf des Befestigungsorgans zur Verriegelung der Zierblende in ihrer Stellung bezüglich des Rads axial beweglich montiert ist.

3. Zierblende nach Anspruch 2, dadurch gekennzeichnet, daß das Blockierorgan (10) um jeden Stecker (6) herum eine Muffe (11) besitzt.

4. Zierblende nach Anspruch 1, bei der die Einhakmittel elastisch verformbare Haken (16) besitzen, die so ausgelegt sind, daß sie mit dem Rad (15) des Fahrzeugs zusammenwirken können, dadurch gekennzeichnet, daß die Blockiermittel ein Blockierorgan (18) umfassen, das in Höhe jedes Hakens mit einer Anschlagfläche versehen ist, wobei dieses Organ zwischen einer ausgerückten Stellung zur Freigabe der Haken für das Aufsetzen oder die Abnahme der Zierblende und einer aktiven Stellung der Blockierung dieser Haken durch die Anschlagflächen zur Verriegelung der Zierblende in ihrer Stellung bezüglich des Rads beweglich montiert ist.

5. Zierblende nach Anspruch 4, dadurch gekennzeichnet, daß das Blockierorgan (18) zwischen seiner ausgerückten Stellung und seiner aktiven Stellung axial beweglich montiert ist.

6. Zierblende nach einem der Ansprüche 2 bis 5, dadurch gekennzeichnet, daß das Blockierorgan (10; 18) einen für den Benutzer von der Vorderseite der Zierblende aus zugänglichen Betätigungsteil (12; 19) für die Bewegung des Anschlagorgans (10; 18) zwischen seiner ausgerückten und seiner aktiven Stellung besitzt.

7. Zierblende nach Anspruch 6, dadurch gekennzeichnet, daß der Betätigungsteil Mittel (13) zur Sicherheitsverriegelung des Blockierorgans mindestens in der aktiven Stellung besitzt.

8. Zierblende nach Anspruch 7, dadurch gekennzeichnet, daß die Sicherheitsverriegelungsmittel (13) ein Schloß umfassen, dem ein Schlüssel zugeordnet ist.
